## Europäisches Patentamt
## European Patent Office
## Office européen des brevets

(19)

(11) Veröffentlichungsnummer: **0 318 460**
**A2**

(12)

# EUROPÄISCHE PATENTANMELDUNG

(21) Anmeldenummer: **88890296.2**

(22) Anmeldetag: **28.11.88**

(51) Int. Cl.⁴: **C 04 B 7/43**

(30) Priorität: **27.11.87 DD 309576**

(43) Veröffentlichungstag der Anmeldung:
**31.05.89 Patentblatt 89/22**

(84) Benannte Vertragsstaaten:
**AT BE CH DE FR GB IT LI NL SE**

(71) Anmelder: **VOEST-ALPINE INDUSTRIEANLAGENBAU GESELLSCHAFT M.B.H.**
**Turmstrasse 44**
**A-4020 Linz (AT)**

(84) Benannte Vertragsstaaten:
**AT BE CH DE FR GB IT LI NL SE**

(71) Anmelder: **PERLMOOSER ZEMENTWERKE AKTIENGESELLSCHAFT**
**Operngasse 11**
**A-1043 Wien (AT)**

(84) Benannte Vertragsstaaten:
**AT BE CH DE FR GB IT LI NL SE**

(71) Anmelder: **VEB ZEMENTANLAGENBAU DESSAU**
**Brauereistrasse 13**
**DDR-4500 Dessau (DD)**

(84) Benannte Vertragsstaaten: **AT**

(72) Erfinder: **Hanser, Siegmar, Dipl.-Ing. Dr.**
**Am Exerzierfeld 27**
**A-4060 Leonding (AT)**

**Seisenbacher, Wilhelm, Dipl.-Ing.**
**Eck 90**
**A-4813 Altmünster (AT)**

**Werner, Wolfgang, Dipl.-Ing.**
**Eupener Strasse 11**
**DDR-4500 Dessau-Ziebigk (DD)**

**Nestler, Wolfgang, Dipl.-Ing.**
**Rathenauerstrasse 1**
**DDR-4500 Dessau (DD)**

**Kwech, Ludwig, Ing.**
**Gerngasse 17**
**A-2391 Kaltenleutgeben (AT)**

**Bittner, Werner, Dipl.-Ing. Dr. mont.**
**Hauptstrasse 158A**
**A-2391 Kaltenleutgeben (AT)**

(74) Vertreter: **Hübscher, Helmut, Dipl.-Ing. et al**
**Patentanwälte Dipl.-Ing. Gerhard Hübscher Dipl.-Ing.**
**Helmut Hübscher Dipl.-Ing. Heiner Hübscher**
**Spittelwiese 7**
**A-4020 Linz (AT)**

(54) **Verfahren und Vorrichtung zum Vorwärmen von Rohmehl.**

(57) Um beim Vorwärmen von Rohmehl mit Hilfe der bei einer nachfolgenden Wärmebehandlung des Rohmehls anfallenden heißen Abgase in einem mehrstufigen Wärmetauscher (1) die fühlbare Abwärme der Abgase aus dem Wärmetauscher (1) zur Deckung des Wärmebedarfes eines zusätzlichen Wärmeverbrauchers (13) ausnützen zu können, wird ein Teilstrom des vorzuwärmenden Rohmehls über eine vorstellbare Rohmehlweiche (6) in einer vom Wärmebedarf des zusätzlichen Wärmeverbrauchers (13) abhängigen Menge einer der aufgabeseitigen Wärmetauschereinheit (2) nachgeordneten Wärmetauschereinheit (3) aufgegeben.

FIG.1

EP 0 318 460 A2

## Beschreibung

### Verfahren und Vorrichtung zum Vorwärmen von Rohmehl

Die Erfindung bezieht sich auf ein Verfahren zum Vorwärmen von Rohmehl mit Hilfe der bei einer nachfolgenden Wärmebehandlung des Rohmehls anfallenden heißen Abgase in einem mehrstufigen Wärmeaustausch, wobei die fühlbare Abwärme der Abgase nach der Vorwärmung des Rohmehls in einer zusätzlichen Wärmebehandlungsstufe ausnützbar ist sowie auf eine Vorrichtung zur Durchführung des Verfahrens.

Bei der Herstellung von Zementklinker ist es bekannt, die fühlbare Wärme der Abgase aus dem mehrstufigen Wärmetauscher für die Vorwärmung des Rohmehls in einer weiteren Wärmebehandlungsstufe, beispielsweise in einer Mahltrocknungsanlage für das Rohmehl, auszunützen, wobei das Problem besteht, daß bei einer anzustrebenden, guten Wärmeausnützung der beim Brennen des weitgehend entsäuerten Rohmehls zu Zementklinker, beim Kühlen des Zementklinkers und bei der Kalzinierung des Rohmehls anfallenden Abgase für die Rohmehlvorwärmung das Wärmeangebot der Abgase nach der Rohmehlvorwärmung für die zusätzliche Wärmebehandlungsstufe im allgemeinen nicht ausreicht. Werden zur Deckung des Wärmebedarfs der zusätzlichen Wärmebehandlungsstufe die Abgase aus dem Wärmetauscher für die Rohmehlvorwärmung mit Hilfe von Brennern wieder erwärmt, so muß nicht nur ein erheblicher konstruktiver Mehraufwand, sondern auch eine empfindliche Verringerung der Wärmewirtschaftlichkeit der Gesamtanlage in Kauf genommen werden. Die Zuführung zusätzlichen Brennstoffs in die Sinter- oder Entsäuerungsstufe, um die für die Mahltrocknungsanlage erforderliche Abgastemperatur nach der Rohmehlvorwärmung sicherzustellen, führt wiederum zur Gefahr einer Überhitzung des Rohmehls im Bereich der Sinter-, Entsäuerungs-und Vorwärmstufe, was Störungen im Betrieb der Anlage zur Folge haben kann.

Eine andere Möglichkeit zur Versorgung der die zusätzliche Wärmebehandlungsstufe bildenden Mahltrocknungsanlage mit der benötigten Wärmemenge besteht darin, einen Teil der Abgase bei der gewünschten Abgastemperatur an geeigneter Stelle aus dem Wärmetauscher abzuzweigen und unmittelbar der zusätzlichen Wärmebehandlungsstufe zuzuführen. Nachteilig dabei ist allerdings, daß ein Teil der für die Vorwärmung des Rohmehls benötigten Gasmenge sowie deren Wärmeenergie für die Rohmehlvorwärmung verlorengeht, was sich in ungünstiger Weise auf die Steuerung der Vorwärmung auswirkt, weil nicht mit einem gleichbleibenden Wärmebedarf der zusätzlichen Wärmebehandlungsstufe gerechnet werden kann. Die Mahltrocknungsanlage wird ja nicht während der gesamten Betriebszeit der Sinterstufe betrieben, so daß in diesem Fall unterschiedlich große Gasmengen mit unterschiedlichen Temperaturen für die Vorwärmung des Rohmehls anfallen.

Der Erfindung liegt somit die Aufgabe zugrunde, diese Mängel zu vermeiden und ein Verfahren zur Rohmehlvorwärmung der eingangs geschilderten Art so zu verbessern, daß auch bei einem unterschiedlichen Wärmebedarf der zusätzlichen Wärmebehandlungsstufe das Wärmeangebot der Abgase nach der Rohmehlvorwärmung an diesen Wärmebedarf unter Erhöhung der Wärmewirtschaftlichkeit der Gesamtanlage angepaßt werden kann, ohne eine aufwendige Steuerung der Vorwärmung in Kauf nehmen zu müssen.

Die Erfindung löst die gestellte Aufgabe dadurch, daß zu mindest ein Teilstrom des vorzuwärmenden Rohmels in einer vom Wärmebedarf der zusätzlichen Wärmebehandlungsstufe ab hängigen Menge einer der aufgabeseitigen Wärmetauscherstufe nachgeordneten Wärmetauscherstufe aufgegeben wird.

Da der dem Wärmetauscher zugeführte Rohmehlstrom in wenigstens zwei Teilströme aufgeteilt wird, von denen einer der aufgabeseitigen Wärmetauscherstufe und der andere einer nachgeordneten Wärmetauscherstufe zugeführt werden, wird die fühlbare Wärme der unverändert geführten Abgase nach der Rohmehlvorwärmung in Abhängigkeit von der Mengenaufteilung des Rohmehls auf die beiden Teilströme erhöht, so daß über diese Rohmehlaufteilung das Wärmeangebot der Abgase nach der Rohmehlvorwärmung in vorteilhafter Weise an den Wärmebedarf der zusätzlichen Wärmebehandlungsstufe angepaßt werden kann. Um den Verlust an Wärmeenergie für die Vorwärmung durch den Bedarf von Abgasen höheren Wärmeinhalts für den Betrieb der zusätzlichen Wärmebehandlungsstufe ausgleichen zu können, kann der gesamte Wärmeenergieeinsatz durch eine Steigerung der Brennstoffzufuhr entsprechend erhöht werden, ohne jedoch der Gefahr einer örtlichen Überhitzung begegnen zu müssen, weil ja durch die zusätzliche Wärmeenergie lediglich die sonst zu geringere Rohmehlvorwärmung sichergestellt wird.

Der Rohmehlstrom kann in Abhängigkeit von verschiedenen, den Wärmebedarf der zusätzlichen Wärmebehandlungsstufe bestimmenden Parametern in Teilströme aufgeteilt werden, beispielsweise in Abhängigkeit vom Feuchtigkeitsgehalt des in der zusätzlichen Wärmebehandlungsstufe zu trocknenden Gutes, das das zu behandelnde Rohmehl, aber auch ein anderes Behandlungsgut sein kann. Besonders einfache Bedingungen ergeben sich allerdings, wenn die Aufteilung des Rohmehlstromes in je einer anderen Wärmetauscherstufe aufgebbare Teilströme in Abhängigkeit von einer Sollwertvorgabe für die Abgastemperatur nach der Rohmehlvorwärmung erfolgt, weil in diesem Fall die Abgastemperatur selbst geregelt wird.

Bei einem besonders hohen Wärmebedarf der zusätzlichen Wärmebehandlungsstufe kann auch der gesamte Rohmehlstrom der der aufgabeseitigen Wärmetauscherstufe nachgeordneten Wärmetauscherstufe zugeführt werden. Bei einer solchen Rohmehlführung kann der Abgasstrom aus der mit dem gesamten Rohmehl beschickten Wärmetauscherstufe unter Umgehung der aufgabeseitigen Wärmetauscherstufe unmittelbar an die zusätzliche Wärmebehandlungsstufe weitergeleitet werden.

Um eine weitere Einstellungsmöglichkeit für die Abgastemperatur zu erhalten, kann auch bei einer Aufteilung des Rohmehlstromes der Abgasstrom aus der der aufgabeseitigen Wärmetauscherstufe nachgeordneten, mit einem Teilstrom des Rohmehls beschickten Wärmetauscherstufe unter Umgehung der aufgabeseitigen Wärmetauscherstufe dem Abgasstrom aus dieser Wärmetauscherstufe zugemischt werden.

Zur Durchführung eines solchen Verfahrens kann von einer Anlage mit einem mehrstufigen, mit heißen Abgasen aus einer nachgeschalteten Behandlungsvorrichtung für das Rohmehl betriebenen Wärmetauscher ausgegangen werden, dessen Abgasableitung an einen zusätzlichen Wärmeverbraucher anschließbar und dessen aufgabeseitige Wärmetauschereinheit mit einer Aufgabeleitung für das Rohmehl verbunden ist. Enthält bei einer solchen Anlage die Aufgabeleitung für das Rohmehl eine verstellbare Rohmehlweiche mit einer Zweigleitung zu der aufgabeseitigen Wärmetauschereinheit und mit einer Zweigleitung zu einer nachgeordneten Wärmetauschereinheit, so kann über die Rohmehlweiche der zugeführte Rohmehlstrom in Teilströme entsprechender Mengen aufgeteilt werden, um eine bestimmte Abgastemperatur im Bereich der Abgasableitung des Wärmetauschers sicherzustellen.

Eine zusätzliche Möglichkeit, die Abgastemperatur im Bereich der Abgasableitung des Wärmetauschers zu beeinflussen, besteht darin, daß die Abgasleitung der aufgabeseitigen Wärme tauschereinheit mit der Abgasleitung der an eine Zweigleitung angeschlossenen, nachgeordneten Wärmetauschereinheit über eine Verbindungsleitung verbunden ist und daß die Verbindungsleitung und die Abgasleitung der aufgabeseitigen. Wärmetauschereinheit vor der Einmündung in die Verbindungsleitung je eine verstellbare Abgasklappe aufweisen. Durch diese Maßnahme wird es möglich, zumindest einen Teil des Abgasstromes aus der an eine Zweigleitung angeschlossenen, nachgeordneten Wärmetauschereinheit unter Umgehung der aufgabeseitigen Wärmetauschereinheit in die Abgasableitung des Wärmetauschers zu fördern, so daß der durch die Verbindungsleitung strömende Abgasstrom nicht durch die aufgabeseitige Wärmetauschereinheit geführt werden muß.

Die in Abhängigkeit vom Wärmebedarf eines zusätzlichen Wärmeverbrauchers vorgenommene Aufteilung des dem Wärmetauscher zugeführten Rohmehlstromes kann mit gleicher Wirkung sowohl bei Wärmetauschern mit nur einem Abgasstrang als auch bei Wärmetauschern mit zwei oder mehreren Abgassträngen angewendet werden. Bei einem Wärmetauscher mit zwei parallelen Abgassträngen und einer Rohmehlführung abwechselnd von einer Wärmetauschereinheit des einen zu einer Wärmetauschereinheit des anderen Abgasstranges kann die Aufgabeleitung für das Rohmehl vorteilhaft eine zusätzliche Rohmehlweiche mit einer Zweigleitung zu der der aufgabeseitigen Wärmetauschereinheit nachgeordneten Wärmetauschereinheit des anderen Abgasstranges aufweisen, was eine einfache Feinregelung der Abgastemperatur im Bereich der Abgasableitung des Wärmetauschers über diese zusätzliche Rohmehlweiche erlaubt.

Zur Steuerung der Rohmehlweiche in der Aufgabeleitung des Wärmetauschers kann diese Rohmehlweiche an eine Steuereinrichtung angeschlossen werden, die mit einem Temperaturfühler in der Abgasableitung des Wärmetauschers verbunden ist und die Rohmehlweiche in Abhängigkeit von einer allenfalls auftretenden Differenz zwischen dem gemessenen Istwert der Abgastemperatur und einem vorgegebenen, für die Temperatursteuerung eine Führungsgröße darstellenden Sollwert verstellt.

An Hand der Zeichnung wird das erfindungsgemäße Verfahren näher erläutert. Es zeigen

Fig. 1 eine erfindungsgemäße Anlage zur Durchführung des Verfahrens zum Vorwärmen von Rohmehl mit einem einen Abgasstrang aufweisenden Wärmetauscher ausschnittsweise in einem schmatischen Blockschaltbild,

Fig. 2 eine der Fig. 1 entsprechende Darstellung einer Anlage mit einem Wärmetauscher mit zwei Abgassträngen und

Fig. 3 eine Konstruktionsvariante zu der Anlage nach Fig. 2.

Obwohl das erfindungsgemäße Verfahren nicht auf Anlagen zum Brennen von Zement beschränkt ist und überall dort angewandt werden kann, wo die fühlbare Abwärme der Abgase eines mit Heißgasen betriebenen Wärmetauschers zum Erwärmen eines Wärmebehandlungsgutes für einen an den Wärmetauscher anschließbaren Wärmeverbraucher ausgenützt werden soll, wie dies beispielsweise beim Gipsbrennen oder beim Kalzinieren von Kalkstein oder Dolomit der Fall sein kann, wird in den Dargestellten Ausführungsbeispielen auf solche Anlagen zum Brennen von Zementklinker Bezug genommen.

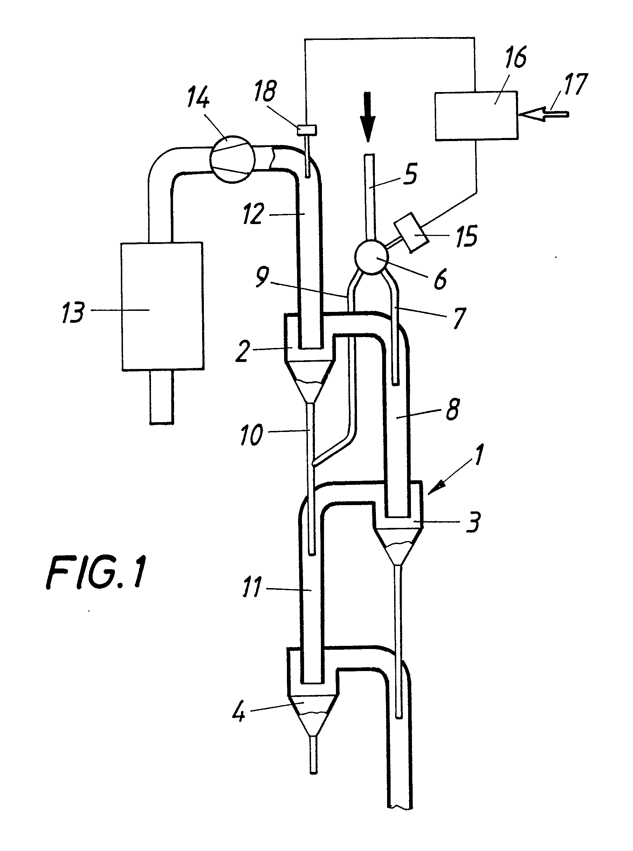

Entsprechend der Fig. 1 werden die aus einem Drehrohrofen und einem Kalzinator anfallenden heißen Abgase in einem Abgasstrang durch einen Wärmetauscher 1 geführt, der aus mehreren Wärmetauschereinheiten 2, 3 und 4 aufgebaut ist. Das in dem Wärmetauscher 1 mit Hilfe der heißen Abgase vorzuwärmende Rohmehl wird diesem Wärmetauscher 1 über eine Aufgabeleitung 5 zugeführt, die eine Rohmehlweiche 6 enthält, von der eine Zweigleitung 7 in die zu der aufgabeseitigen Wärmetauschereinheit 2 führende Steigleitung 8 mündet, während die andere Zweigleitung 9 mit der Austragsleitung 10 der aufgabeseitigen Wärmetauschereinheit 2 verbunden ist und mit dieser in die Steigleitung 11 zu der Wärmetauschereinheit 3 führt, die der hinsichtlich des Rohmehlstromes aufgabeseitigen, ersten Wärmetauschereinheit 2 nachgeordnet ist.

Die Abgasableitung 12 des Wärmetauschers 1 ist an einem zusätzlichen Wärmeverbraucher 13 angeschlossen, und zwar über ein Fördergebläse 14, so daß die fühlbare Abwärme der Abgase aus dem Wärmetauscher 1 in dem Wärmeverbraucher 13 beispielsweise zum Vortrocknen des Rohmehls ausgenützt werden kann.

Um das Wärmeangebot der Abgase aus dem Wärmetauscher 1 an den jeweiligen Wärmebedarf des Wärmeverbrauchers 13 anpassen zu können, wird der über die Aufgabeleitung 5 zugeführte Rohmehlstrom in Abhängigkeit vom Wärmebedarf des Wärmeverbrauchers 13 in zwei Teilströme aufgeteilt, und zwar über die Rohmehlweiche 6, deren Stelleinrichtung 15 von einer Steuereinrichtung 16 beaufschlagt wird, und zwar in Abhängigkeit von einem Sollwert für die Abgastemperatur, der entsprechend dem Wärmebedarf des Wärmeverbrauchers 13 der Steuereinrichtung 16 über eine Sollwertvorgabe 17 als Führungsgröße eingegeben wird. Der Istwert der Abgastemperatur wird dabei über einen Temperaturfühler 18 in der Abgasableitung 12 des Wärmetauschers 1 erfaßt und an die Steuereinrichtung 16 weitergeleitet, die die Stellrichtung 15 für die Rohmehlweiche 6 im Sinne eines Soll-Istwertabgleiches ansteuert. Wird nämlich die Menge des durch die Zweigleitung 9 der nachgeordneten Wärmetauschereinheit 3 aufgegebenen Rohmehlteilstromes vergrößert, so erhöht sich die Abgastemperatur, während sich die Abgastemperatur bei einer Vergrößerung der der aufgabeseitigen Wärmetauschereinheit 2 aufgegebenen Rohmehlmenge verringert. Es kann daher über die Steuerung der Aufteilung des Rohmehlstromes in zwei Teilströme die Abgastemperatur in vorteilhafter Weise an den Wärmebedarf des Wärmeverbrauchers 13 angepaßt werden. Wird der Wärmeverbraucher 13 abgeschaltet, so erfolgt die Rohmehlzuführung ausschließlich über die Zweigleitung 7 zur aufgabeseitigen Wärmetauschereinheit 2, was übliche Vorwärmbedingungen für das Rohmehl schafft. Der maximale Wärmebedarf des Wärmeverbrauchers 13 kann bei einer Umschaltung der Rohmehlweiche 6 ausschließlich auf die Zweigleitung 9 gedeckt werden, weil in diesem Fall die aufgabeseitige Wärmetauschereinheit 2 für die Rohmehlvorwärmung überhaupt entfällt.

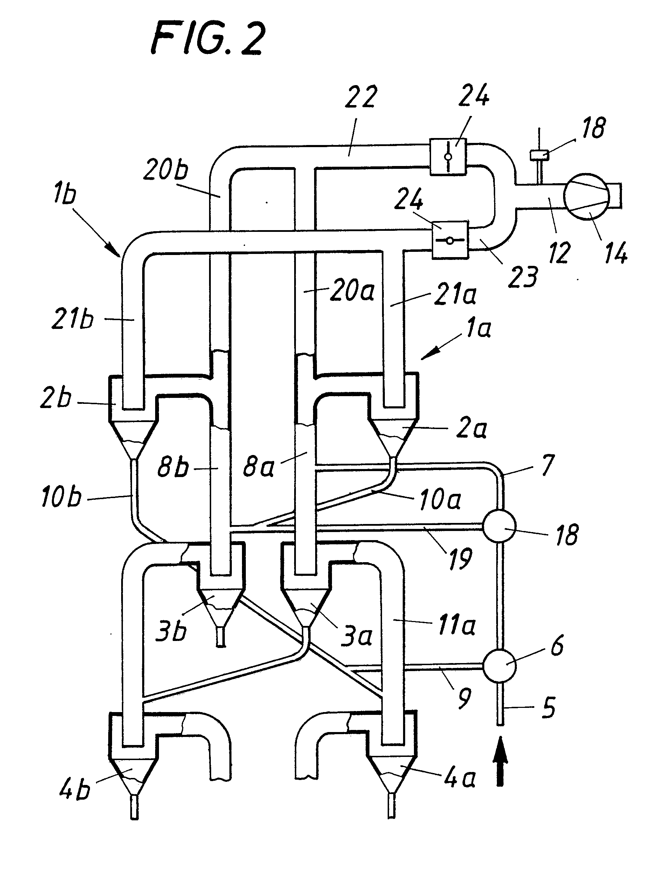

Zum Unterschied zu der Anlage nach Fig. 1 zeigt Fig. 2 einen Wärmetauscher mit zwei parallelen Abgassträngen 1a und 1b, die die Wärmetauschereinheiten 2a, 3a, 4a einerseits und 2b, 3b, 4b anderseits enthalten. Die Anordnung ist dabei so getroffen, daß der Rohmehlstrom abwechselnd von einer Wärmetauschereinheit des einen zur Wärmetauschereinheit des anderen Abgasstranges geführt wird. So mündet beispielsweise die Austragsleitung 10a des aufgabeseitigen Wärmetauschers 2a des Abgasstranges 1a in der Steigleitung 8b zu der Wärmetauschereinheit 2b des Abgasstranges 1b, die bezüglich des Rohmehlstromes der aufgabeseitigen Wärmetauschereinheit 2a nachgeschaltet ist, sich hinsichtlich der Gasführung jedoch in der gleichen Wärmetauscherstufe mit der Wärmetauschereinheit 2a befindet.

Das über die Aufgabeleitung 5 zugeführte Rohmehl wird wiederum über eine Rohmehlweiche 6 in Abhängigkeit von der gewünschten Abgastemperatur in zwei Teilströme aufgeteilt, von denen einer über die Zweigleitung 7 in das Steigrohr 8a zu der aufgabeseitigen Wärmetauschereinheit 2a und der andere über die Zweigleitung 9 in das Steigrohr 11a zu der nachgeordneten Wärmetauschereinheit 3a der zweiten Wärmetauscherstufe gefördert wird. Um eine zusätzliche Feinregelung der Abgastemperatur zu erreichen, kann über eine zusätzliche Rohmehlweiche 18 der eine Rohmehlteilstrom für die erste Wärmetauscherstufe auf die Wärmetauschereinheiten 2a und 2b der beiden Abgasstränge 1a und 1b aufgeteilt werden, wobei der eine Rohmehlteilstrom über die Zweigleitung 19 zusammen mit dem Rohmehlteilstrom aus der Austragsleitung 10a der Steigleitung 8b für die Wärmetauschereinheit 2b zugeführt wird. In Sonderfällen könnte auch die Rohmehlaufteilung ausschließlich auf die Wärmetauschereinheiten 2a und 2b erfolgen.

Wie der Fig. 2 entnommen werden kann, sind die Steigleitungen 8a und 8b, die das Abgas aus den nachgeordneten Wärmetauschereinheiten 3a und 3b führen, über Verbindungsleitungen 20a und 20b mit den Abgasleitungen 21a und 21b verbunden, wobei die Abgasleitungen 20a und 20b einerseits und die Abgasleitungen 21a und 21b anderseits zu je einer Sammelleitung 22 und 23 zusammengefaßt sind, die in der Abgasableitung 12 des Wärmetauschers münden. In diesen Sammelleitungen 22 und 23 sind Abgasklappen 24 eingeschaltet, die die Abgasströmungen durch die Wärmetauschereinheiten 2a und 2b entsprechend steuern. Im dargestellten Fall sind die Verbindungsleitung 20a und 20b über die Abgasklappe 24 in der Sammelleitung 22 verschlossen, so daß in beiden Abgassträngen 1a und 1b die gesamte Abgasmenge über die Wärmetauschereinheiten 2a und 2b geführt wird. Die Abgasklappe 24 in der Sammelleitung 23 muß daher offen sein. Mit Hilfe der Abgasklappen 24 kann aber auch zumindest ein Teil der Abgase aus der zweiten Wärmetauscherstufe, die durch die Wärmetauschereinheiten 3a und 4b gebildet wird, unter Umgehung der ersten Wärmetauscherstufe unmittelbar der Abgasableitung 12 zugefördert werden. Diese Umgehung der ersten Wärmetauscherstufe wird vor allem dann zum Tragen kommen, wenn der gesamte Rohmehlstrom über die Zweigleitung 9 der zweiten Wärmetauscherstufe aufgegeben wird.

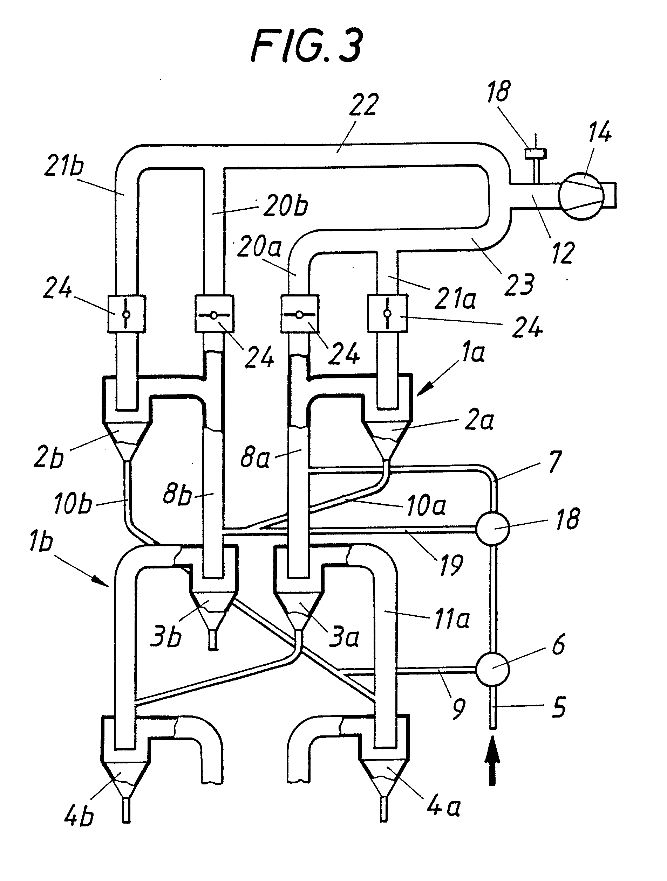

Die Anlage nach Fig. 3 unterscheidet sich von der Anlage nach Fig. 2 lediglich durch die Abgasführung aus der ersten und zweiten Wärmetauscherstufe, weil die Verbindungsleitun gen 20a und 20b zwischen den Steigrohren 8a und 8b und den Abgasleitungen 21a und 21b nicht vor ihrem Zusammenschluß mit den Abgasleitungen 21a und 21b in einer Sammelleitung 22 zusammengefaßt werden, sondern unmittelbar mit den Abgasleitungen 21a und 21b verbunden sind, so daß die an die Abgasableitung 12 angeschlossenen Sammelleitungen 22 und 23 je einem Abgasstrang 1a bzw. 1b zugeordnet werden. Diese Anordnung bedingt, daß sowohl in den Verbindungsleitungen 20a und 20b als auch in den Abgasleitungen 21a und 21b je eine Abgasklappe 24 zur Steuerung des Abgasstromes in den beiden Abgassträngen vorgesehen werden muß, was allerdings den Vorteil einer genaueren Steuerung mit sich bringt, weil die beiden Abgasstränge auch hinsichtlich der Gasführung unterschiedlich gefahren werden können.

**Patentansprüche**

1. Verfahren zum Vorwärmen von Rohmehl mit Hilfe der bei einer nachfolgenden Wärmebehandlung des Rohmehls anfallenden heißen Abgase in einem mehrstufigen Wärmeaustausch, wobei die fühlbare Abwärme der Abgase nach der Vorwärmung des Rohmehls in einer zusätzlichen Wärmebehandlungsstufe ausnützbar ist, dadurch gekennzeichnet, daß zumindest ein Teilstrom des vorzuwärmenden Rohmehls in einer vom Wärmebedarf der zusätzlichen Wärmebehandlungsstufe abhängigen Menge einer der aufgabeseitigen Wärmetauscherstufe nachgeordneten Wärmetauscherstufe aufgegeben wird.

2. Verfahren nach Anspruch 1, dadurch gekennzeichnet, daß die Aufteilung des Rohmehls in je einer Wärmetauscherstufe aufgebbare Teilströme in Abhängigkeit von einer Sollwertvorgabe für die Abgastemperatur nach der Rohmehlvorwärmung erfolgt.

3. Verfahren nach Anspruch 1 oder 2, dadurch gekennzeichnet, daß der Abgasstrom aus der der aufgabeseitigen Wärmetauscherstufe nachgeordneten, mit einem Teilstrom des Rohmehls beschickten Wärmetauscherstufe unter Umgehung der aufgabeseitigen Wärmetauscherstufe dem Abgasstrom aus dieser Wärmetauscherstufe zugemischt wird.

4. Anlage zur Durchführung des Verfahrens nach einem der Ansprüche 1 bis 3 mit einem mehrstufigen, mit heißen Abgasen aus einer nachgeschalteten Behandlungsvorrichtung für das Rohmehl betriebenen Wärmetauscher (1), dessen Abgasableitung (12) an einen zusätzlichen Wärmeverbraucher (13) anschließbar und dessen aufgabeseitige Wärmetauschereinheit (2, 2a) mit einer Aufgabeleitung (5) für das Rohmehl verbunden ist, dadurch gekennzeichnet, daß die Aufgabeleitung (5) für das Rohmehl eine verstellbare Rohmehlweiche (6) mit einer Zweigleitung (7) zu der aufgabeseitigen Wärmetauschereinheit (2, 2a) und mit einer Zweigleitung (9) zu einer nachgeordneten Wärmetauschereinheit (3, 3a) enthält.

5. Anlage nach Anspruch 4, dadurch gekennzeichnet, daß zumindest die Abgasleitung (21a) der aufgabeseitigen Wärmetauschereinheit (2a) der ersten Wärmetauscherstufe mit der Abgasleitung (8a) der an eine Zweigleitung (9) angeschlossenen, nachgeordneten Wärmetauschereinheit (3a) der zweiten Wärmetauscherstufe über eine Verbindungsleitung (20a) verbunden ist und daß die Verbindungsleitung (20a) und die Abgasleitung (21a) der aufgabeseitigen Wärmetauschereinheit (2a) vor der Einmündung in die Verbindungsleitung (20a) je eine verstellbare Abgasklappe (24) aufweisen.

5. Anlage nach Anspruch 4 oder 5, dadurch gekennzeichnet, daß bei einem Wärmetauscher mit zwei parallelen Abgassträngen (1a, 1b) und einer Rohmehlführung abwechselnd von einer Wärmetauschereinheit (2a, 3a, 4a) des einen zu einer Wärmetauschereinheit (2b, 3b, 4b) des anderen Abgasstranges (1a, 1b) die Aufgabeleitung (5) für das Rohmehl eine zusätzliche Rohmehlweiche (18) mit einer Zweigleitung (19) zu der der aufgabeseitigen Wärmetauschereinheit (2a) nachgeordneten Wärmetauschereinheit (2b) des anderen Abgasstranges (1b) aufweist.

7. Anlage nach einem der Ansprüche 4 bis 6, dadurch gekennzeichnet, daß in der Abgasableitung (12) des Wärmetau schers (1) ein an eine Steuereinrichtung (16) für die Rohmehlweiche (6) angeschlossener Temperaturfühler (18) vorgesehen ist.

FIG.1

# FIG.2

# FIG. 3